# FASCICULE DE BREVET EUROPEEN

(11) **EP 1 845 134 B1**
(45) Date de publication et mention de la délivrance du brevet: **16.10.2013**
(21) Numéro de dépôt: 07300865.8
(22) Date de dépôt: 16.03.2007
(51) Int. Cl.: C08L 95/00, C08L 91/06, C08L 23/06, C08K 5/103, C08K 5/1515, E01C 7/26, C09D 195/00, E01C 7/18

(54) **Liants routiers à base de bitume, de fluxants d'origine naturelle fonctionnalisés et de cire**
Straßenbaubindemittel auf Basis von Bitumen, funktionalisierten Verdünnungsmitteln natürlichen Ursprungs und Wachs
Road binders based on asphalt, functionalised natural fluxing agents and wax

(30) Priorité: 17.03.2006 FR 0650931
(43) Date de publication de la demande: 17.10.2007
(73) Titulaire: COLAS, 92100 Boulogne-Billancourt (FR)
(72) Inventeur: Deneuvillers, Christine, 92290, Chatenay Malabry (FR); Harnois, Stéphane, 78280, Guyancourt (FR)
(74) Mandataire: Catherine, Alain

(56) Documents cités:
- WO-A-2004/108830
- WO-A-2005/087869
- EDWARDS Y ET AL: "Rheological effects of commercial waxes and polyphosphoric acid in bitumen 160/220-low temperature performance", FUEL, IPC SCIENCE AND TECHNOLOGY PRESS, GUILDFORD, GB, vol. 85, no. 7-8, 24 October 2005 (2005-10-24), pages 989-997, XP025235550, ISSN: 0016-2361, DOI: DOI:10.1016/J.FUEL.2005.09.014 [retrieved on 2006-05-01]

## Description

La présente invention concerne un liant hydrocarboné à base de bitume fluxé ainsi qu'un matériau comprenant un tel liant pour une utilisation principalement dans la réalisation de couches et/ou revêtements de construction routière et/ou de génie civil.

Le bitume est le principal liant hydrocarboné utilisé dans le domaine de la construction routière ou du génie civil. Il peut être utilisé pur ou modifié par ajout de polymères, il est alors appelé bitume modifié.

Il existe différents moyens de rendre le bitume ou le bitume modifié maniable : soit par chauffage en fonction de sa viscosité, soit en le plaçant en émulsion ou encore en abaissant sa viscosité par mélange avec des solvants ou "fluxants", pour la plupart d'origine pétrolière, pétrochimique ou carbochimique.

Le bitume retrouve ses propriétés d'origine, une fois mis en oeuvre, quelle que soit la technique employée, par refroidissement, par évaporation de l'eau de l'émulsion ou par évaporation du solvant. Cette dernière alternative conduit à des dégagements dans l'atmosphère de composés organiques volatils, issus d'énergie fossile, dégagements peu recommandés pour l'environnement.

On sait déjà utiliser des agents fluxants pour bitume, également appelés huiles de fluxage, à base de matières grasses animales et/ou végétales, renouvelables et non toxiques. Leur utilisation permet d'éviter le dégagement de composés organiques volatils (COV).

Les demandes de brevets FR 2721043 et FR 2770850 décrivent ainsi des compositions bitumineuses comprenant des fluxants végétaux tels que des huiles végétales (colza) ou leurs dérivés, tels que leur partie acide gras, un produit de trans-estérification par un alcanol en C₁ à C₆, un dérivé de résine alkyde de l'huile, ou bien un résidu de distillation de l'huile. Cependant, les matières grasses naturelles utilisées dans ces demandes ne possèdent pas en général un pouvoir siccatif suffisant pour arriver à polymériser assez rapidement sans catalyseur, ce qui conduit à des liants trop mous se dégradant parfois rapidement lorsque l'on veut remettre la chaussée en service très rapidement. Pour remédier à ces inconvénients, certaines demandes de brevets telles que FR 2701021 et FR 2768150 préconisent d'ajouter des catalyseurs comprenant des sels métalliques pour accélérer la réticulation du fluxant au niveau de ses doubles liaisons C=C, mais ceux-ci sont peu recommandés pour l'environnement.

D'autres demandes proposent de pallier ces inconvénients par modification chimique des matières grasses d'origine naturelle utilisées en tant que fluxant, dans le but d'augmenter leur réactivité vis-à-vis du bitume et/ou d'augmenter leur siccativité, c'est-à-dire leur aptitude à polymériser en présence de l'oxygène de l'air, de façon à conférer au liant ses propriétés d'usage sans dégagement de composés organiques volatils.

Les demandes FR 2768150, EP 1482012 et WO 2005/087869 décrivent ainsi des liants bitumineux comprenant en tant que fluxants des huiles végétales ayant été isomérisées et trans-estérifiées, notamment des monoesters méthyliques d'huile de colza, lin ou tournesol isomérisées. Le but du traitement d'isomérisation est l'augmentation du nombre de doubles liaisons C=C conjuguées, qui se traduit par une augmentation du pouvoir siccatif.

La demande de brevet français FR 2876382, au nom du présent déposant, décrit une autre voie de fonctionnalisation chimique, l'oxydation. Les matières grasses d'origine naturelle et leurs dérivés employés en tant que fluxant pour bitume ont subi au moins une réaction de fonctionnalisation chimique ayant introduit au moins un groupe fonctionnel choisi parmi les groupes acide carboxylique, diacide carboxylique, époxyde, peroxyde, aldéhyde, éther, alcool et cétone. Les matières grasses d'origine naturelle ainsi activées chimiquement pour une application dans un liant routier polymérisent rapidement une fois mélangées avec le bitume.

Il est également connu que l'adjonction de cires à une composition bitumineuse non fluxée permet de modifier certaines de ses propriétés.

Le brevet US 6588974 décrit l'utilisation de cires synthétiques de type Fischer-Tropsch (mélanges d'hydrocarbures aliphatiques), éventuellement partiellement oxydées, pour améliorer la durabilité d'un bitume ou d'un enrobé bitumineux non fluxé. De telles cires facilitent le compactage, améliorent l'adhérence du bitume aux agrégats et rendent ainsi le revêtement plus dur, plus résistant à la déformation sous une charge importante. Elles jouent également le rôle de fluidifiant lorsqu'elles sont à l'état liquide et leur emploi permet de diminuer la température de mise en oeuvre du liant bitumineux.

La demande de brevet US 2004/0102547 décrit quant à elle l'utilisation de cires en tant qu'additifs pour rendre un bitume non fluxé résistant aux dérivés hydrocarbonés tels que le fuel.

La présente invention a pour but un liant bitumineux pour la construction routière ou de génie civil comprenant un fluxant à base de matières grasses d'origine naturelle, ayant de bonnes propriétés de solvant au moment de la préparation du liant, une bonne siccativité et une réactivité suffisante vis-à-vis du bitume lors de la mise en oeuvre, de manière à donner au bitume ses propriétés d'usage, sans dégagement de composés organiques volatils.

La composition du liant bitumineux et la nature du fluxant doivent être telles que les propriétés d'usage du liant sont obtenues rapidement.

Les présents inventeurs ont trouvé qu'il était possible de remplir les objectifs précités en utilisant un bitume fluxé par un fluxant à base de matières grasses d'origine naturelle, associé à une composition de cire.

Ainsi, l'invention a pour objet un liant hydrocarboné pour la réalisation de couches et/ou revêtements de construction routière et/ou de génie civil, comprenant au moins un bitume, au moins un fluxant et comprenant en outre une composition de cire comprenant au moins une cire à l'exception des cires de type amide, ledit fluxant étant un fluxant à base de matières grasses d'origine naturelle.

L'invention a également pour objet un liant hydrocarboné pour la réalisation de couches et/ou revêtements de construction routière et/ou de génie civil, comprenant au moins un bitume et au moins un fluxant, ledit fluxant étant un fluxant à base de matières grasses d'origine naturelle ayant subi une fonctionnalisation chimique par au moins une réaction d'oxydation, caractérisé en ce qu'il comprend en outre une composition de cire comprenant au moins une cire de type amide.

De préférence, le liant hydrocarboné selon l'invention est exempt de catalyseurs, notamment de catalyseurs comprenant des sels métalliques.

Le bitume selon la présente invention est un mélange de matières hydrocarbonées d'origine naturelle issues de la fraction lourde obtenue lors de la distillation du pétrole, ou provenant de gisements naturels se présentant sous forme solide ou liquide, de densité comprise entre 0,8 et 1,2. Les bitumes de l'invention peuvent être préparés par toute technique conventionnelle. Sont également admis comme bitumes au sens de l'invention les liants d'origine végétale tel que le Vegecol^{®} commercialisé par la société Colas et décrit dans la demande de brevet FR 2853647, les bitumes modifiés par incorporation d'additifs de toute nature tels que des additifs en vue d'améliorer les caractéristiques d'adhésivité, en vue d'apporter artificiellement les propriétés nécessaires à la mise en émulsion cationique, par incorporation d'élastomères, sous forme de poudrette de caoutchouc ou autre, ou bien encore les bitumes améliorés par l'addition de polymères de différents types, tels que des copolymères d'éthylène et d'acétate de vinyle, ou des copolymères statistiques ou à blocs de styrène et de diènes conjugués, par exemple les copolymères à blocs SBS. Cette liste n'étant bien entendu pas limitative. Il est également possible d'utiliser des mélanges de bitumes de différents types.

Selon un mode de réalisation particulier, le bitume de l'invention n'est pas un bitume soufflé.

La composition de cire utilisée dans la présente invention comprend une cire ou un mélange de plusieurs cires et peut éventuellement comprendre divers additifs, tels que des polymères de type non cire ou des résines.

Par cire ou mélange de cires au sens de la présente invention, on entend un composé organique ou un mélange de composés organiques, solide ou semi-solide à 20 °C, à changement d'état solide/liquide réversible, ayant un point de fusion supérieur ou égal à 20 °C et pouvant aller jusqu'à 200°C.

Tel qu'il est employé dans la demande, le terme "cire" ne désigne pas une classe de substances chimiques et encore moins une classe homogène de substances chimiques. Il s'agit au contraire d'un terme collectif désignant toutes les substances, naturelles ou synthétiques, qui présentent les propriétés physiques et chimiques typiques de la cire, c'est-à-dire une faible viscosité juste au dessus de leur point de fusion (ce qui les distingue des résines et plastiques), une résistance à l'eau, une faible solubilité à température ambiante dans les solvants des graisses, une capacité à devenir brillantes lorsque frottées (ce qui les distingue des graisses), une aptitude à la production de pâtes ou gels avec des solvants appropriés ou lorsqu'elles sont mélangées avec d'autres cires. Cette définition regroupant une grande variété de substances de natures chimiques différentes est en accord avec le terme "cire" tel qu'il est défini en page 721 du "Hackh's Chemical Dictionary," 4th ed., McGraw-Hill Co., N.Y., 1969 et en page 3 de l'ouvrage "The Chemistry and Technology of Waxes," Albin H. Worth, 2nd Ed., 1956.

De préférence, le point de fusion de la cire ou du mélange de cires peut aller de 25 à 140 °C, mieux de 35 à 120 °C. Ce changement d'état solide/liquide est réversible, si bien que les cires de l'invention ne se décomposent pas à la fusion.

Comme il a été dit, les cires de l'invention peuvent être d'origine naturelle ou synthétiques. Parmi les cires naturelles, on distingue les cires naturelles renouvelables et les cires naturelles non renouvelables. Les cires naturelles renouvelables sont les cires d'origine animale telles que le spermaceti de baleine, la lanoline (cire de laine), les cires en provenance d'insectes telles que la cire d'abeille, la cire de gomme-laque, la cire de Chine, et les cires d'origine végétale telles que la cire de carnauba ou d'Ouricouri, de candélilla, de baie de laurier, d'olivier, d'Alfa, la cire du Japon, l'huile de riz, l'huile de jojoba, les cires absolues de fleurs. Les cires naturelles non renouvelables sont d'origine minérale (cires fossiles), et certaines proviennent du pétrole. Parmi ces cires minérales, on peut citer l'ozocérite, la cérésine, la cire de tourbe, la cire de Montan, la cire de paraffine (cire macrocristalline, qui contient essentiellement des n-alcanes), la cire semicristalline, la cire microcristalline issue par exemple du pétrolatum ou de résidus de distillation du pétrole, la cire de paraffine écaille.

De nombreuses cires en provenance du pétrole sont disponibles dans le commerce et sont utilisables directement dans le cadre de l'invention ou bien après avoir été formulées en composition de cire.

Les cires de type hydrocarbures paraffiniques proviennent généralement de la distillation du pétrole, mais il est également possible de les obtenir directement à partir d'une source naturelle telle que l'ozocérite.

Les cires naturelles renouvelables, c'est à dire d'origine animale ou végétale, et certaines cires minérales comme la cire de Montan, contiennent un mélange complexe généralement majoritairement constitué d'esters d'acides gras. Ils sont communément appelés "esters de cire" et la composition de cire de l'invention peut comprendre un ou plusieurs esters d'acides gras, par exemple, le palmitate de cétyle (C32), le palmitate de lauryle, le myristate de cétyle (C30), le stéarate de stéaryle, le myristate d'isopropyle, l'éthylhexanoate de cétostéaryle ou des esters de l'acide montanique (acide gras en C28). Ces composés peuvent aussi être obtenus par synthèse chimique.

La composition de cire de l'invention peut aussi comprendre un ou plusieurs hydrocarbures aliphatiques chimiquement purs, par exemple des hydrocarbures saturés tels l'heptacosane ou le nonacosane.

Parmi les cires synthétiques, on distingue les cires de polyoléfine, les cires de type éther de polyol ou ester de polyol (Carbowax), qui comprennent une partie acide et/ou alcool de haute masse moléculaire, par exemple des diesters de polyéthylène glycol avec des acides gras en C18-C36, linéaires ou ramifiés (les propriétés désirées étant réglées par la taille de la chaîne alcool et/ou ester), les cires hydrocarbonées halogénées telles que les cires de chloronaphtalène (Halowax), les cires hydrocarbonées obtenues par synthèse de Fischer-Tropsch, les cires de silicones, en particulier d'alkylsilicone, les cires fluorées, les cires de type amide.

Par cires de type amide, on entend les cires obtenues par réaction d'acides gras avec des amines. Lesdites amines peuvent être des monoamines ou des polyamines, par exemple des diamines de type :
H₂N-(CH₂)ₙ-NH₂, n allant de 1 à 6.

Des exemples de cires de type amide sont les cires obtenues par réaction d'acides gras en C8-C30, de préférence C12-C22, par exemple l'acide oléique et l'acide stéarique, avec une amine telle que l'éthylène diamine qui fournit un bisamide. On peut citer par exemple la *N,N'-*bis(stéaroyl)-éthylène diamine.

Les cires de l'invention sont généralement lipophiles, mais il est également possible d'employer des cires ayant un caractère hydrophile, ou bien un mélange de cires lipophiles et hydrophiles. Comme exemples non limitatifs de cires hydrophiles, on peut citer les cires contenant des groupes hydroxyle, notamment les glycérides partiels, c'est-à-dire des mono ou diesters du glycérol avec des acides gras généralement en C12-C18, et leurs mélanges, tels que le mono ou dilaurate de glycéryle, le mono ou dipalmitate de glycéryle, le mono ou dioléate de glycéryle, le mono ou distéarate de glycéryle, ou bien les alcools gras, généralement en C12-C22, tels que l'alcool cétylique, l'alcool myristique, l'alcool béhénylique, l'alcool stéarylique ou l'alcool cétostéarylique. Des cires hydrophiles peuvent aussi être obtenues par fonctionnalisation chimique de cires lipophiles.

Toutes ces cires et bien d'autres cires ayant une application dans le cadre de la présente invention sont décrites dans les livres suivants : "Waxes: Chemistry, Molecular Biology and Functions" (Ed. Hamilton, R. J.), The Oily Press, Dundee, 1995, "Waxes," William P. Cottom, Polymer Material Encyclopedia, Vol. 17 (Eds. Herman F. Mark et al.), John Wiley & Sons, 1989, 614-626.

Les cires préférées dans le cadre de l'invention sont les cires synthétiques de type polyoléfine et Fischer-Tropsch et les cires naturelles minérales en provenance du pétrole, telles que les cires de paraffine, la cire semicristalline ou la cire microcristalline, en raison de leur stabilité et de la constance dans leur qualité et leur composition. Elles peuvent bien entendu être utilisées en mélanges. En particulier, on préfère utiliser la cire de paraffine ou la cire de polyéthylène, ou leurs mélanges.

Les cires peuvent subir diverses modifications chimiques avant d'être incorporées dans la composition de cire de l'invention. Des exemples de modifications chimiques que peuvent subir les cires de l'invention sont décrites dans l'ouvrage Kirk-Othmer Encyclopaedia of Chemical Technology, Wiley-Interscience, 3rd Ed., Vol. 24, 1980, 477-479. Les cires de type ester d'acide gras, polyoléfine, polyméthylène, paraffine et les autres cires issues du pétrole peuvent notamment subir des modifications chimiques, qui introduisent ou non des groupes fonctionnels.

Les cires de la présente invention peuvent être partiellement ou totalement oxydées. Il est bien connu de l'art antérieur que l'emploi de telles cires facilite l'adhérence du bitume aux granulats lors de la préparation d'enrobés bitumineux, l'amélioration observée étant attribuée à la présence de groupes fonctionnels polaires dans ces cires modifiées. L'oxydation peut être accomplie à l'air en présence ou en l'absence d'un catalyseur.

Comme exemples de cires oxydées, on peut citer les cires de Fischer-Tropsch oxydées, les cires de polyoléfine oxydées telles que la cire de polyéthylène oxydée, la cire de polypropylène oxydée, et plus généralement les produits d'oxydation de cires de type hydrocarbure aliphatique peuvent être employés.

Lorsque leur structure le permet, les cires de l'invention peuvent être modifiées chimiquement par greffage de monomères vinyliques tels que le styrène ou l'acide acrylique, ou par réaction avec un acide ou anhydride polycarboxylique, généralement à haute température, par exemple greffage de molécules d'anhydride maléique, ce qui augmente la polarité des cires. On peut notamment utiliser de la cire de polyéthylène modifiée par greffage d'anhydride maléique, disponible commercialement.

Il est également possible d'employer des cires naturelles modifiées, par exemple par hydrogénation partielle ou totale de cires ou d'huiles naturelles, par désacidification partielle ou totale de cires de type esters de cires, par déshuilage partiel ou total, saponification, hydrolyse, estérification ou trans-estérification.

Un exemple de cire naturelle modifiée est la cire acide, par exemple la cire de Montan acide, obtenue par saponification ou hydrolyse de la cire de Montan, cette dernière étant un mélange d'esters d'acides gras et d'acides gras.

Les cires acides ou la fraction d'acides gras libres contenue dans les cires de type ester peuvent être estérifiées par un mono-alcool ou estérifiées partiellement ou totalement par des polyols, tels que l'éthanediol, le 1,3-butanediol, le pentaérythritol ou le glycérol. On peut citer comme exemples les esters de l'acide montanique avec le glycérol, partiels ou non, les esters obtenus par réaction des acides contenus dans la cire de Montan avec des alcools polyfonctionnels tels que le glycérol ou le pentaérythritol.

La composition de cire représente généralement 0,01 à 10 % de la masse totale du liant, de préférence 0,2 à 5 %, mieux 0,2 à 3 % de la masse totale du liant.

De préférence, les fluxants de l'invention sont des fluxant à base de matières grasses d'origine naturelle, et encore mieux, des fluxants à base de matières grasses d'origine naturelle ayant subi une fonctionnalisation chimique par au moins une réaction d'oxydation.

Par "matières grasses d'origine naturelle", on entend, dans la présente invention, les matières grasses en provenance de la nature, mais aussi leurs dérivés, comme par exemple les monoesters gras obtenus par trans-estérification de triglycérides par des mono-alcools.

Les matières grasses d'origine naturelle utilisables dans la présente invention sont préférentiellement choisies parmi les huiles obtenues dans la nature ou leurs dérivés, les graisses obtenues dans la nature ou leurs dérivés, et leurs mélanges, par exemple des huiles et graisses animales et/ou végétales, de préférence des huiles végétales et des graisses animales, mieux des huiles végétales. Ces matières grasses d'origine naturelle peuvent notamment provenir d'huiles végétales usagées de l'industrie agroalimentaire, par exemple d'huiles de friture, à condition que celles-ci aient une origine naturelle.

Sont donc exclues du cadre de l'invention les huiles et graisses de synthèse et les huiles et graisses fossiles, qui ne sont pas renouvelables et ne présentent pas d'intérêt dans le cadre du développement durable.

Les matières grasses d'origine naturelle peuvent être, sans limitation, directement les huiles et graisses d'origine naturelle, ou bien des acides gras, des esters d'acides gras, préférentiellement des esters d'alkyle, mieux des mono-esters d'alkyle, des alcools gras, des esters d'alcools gras, des triglycérides, des esters de diacides gras, des esters d'acides résiniques, des acides résiniques, des dérivés de ces composés, et des mélanges de ces composés, d'origine animale ou végétale.

Préférentiellement, on utilisera les huiles végétales telles que les huiles de tournesol, de colza, d'arachide, de coprah, de lin, de palme, de soja, d'olive, de ricin, de maïs, de courge, de pépins de raisin, de jojoba, de sésame, de noix, de noisette, de bois de chine, le tall oil, leurs dérivés, ainsi que leur mélanges.

Dans le cas où le liant de l'invention comprend une composition de cire comprenant au moins une cire de type amide, le fluxant employé dans ce liant est nécessairement un fluxant à base de matières grasses d'origine naturelle ayant subi une fonctionnalisation chimique par au moins une réaction d'oxydation.

De préférence encore, cette réaction d'oxydation a introduit dans les matières grasses d'origine naturelle au moins un groupe fonctionnel choisi parmi les groupes acide carboxylique, diacide carboxylique, époxyde, peroxyde, aldéhyde, éther, ester, alcool et cétone. Par fonction éther, on entend la fonction éther oxyde.

Ces groupes fonctionnels sont susceptibles de réagir avec des fonctions chimiques d'autres molécules de fluxant, en participant ainsi à une réaction de polymérisation-réticulation, ou avec des fonctions chimiques présentes dans le bitume. Les fonctions chimiques présentes dans le bitume sont par exemple des fonctions acide ou alcool.

Les matières grasses d'origine naturelle fonctionnalisées chimiquement selon l'invention, et donc activées, peuvent être, sans limitation, directement les huiles et graisses d'origine naturelle, ou bien des acides gras, des esters d'acides gras, préférentiellement des esters d'alkyle, mieux des mono-esters d'alkyle, des alcools gras, des esters d'alcools gras, des triglycérides, des esters de diacides gras, des esters d'acides résiniques, des acides résiniques, des dérivés de ces composés, et des mélanges de ces composés, d'origine animale ou végétale.

Les fonctionnalisations chimiques réalisées sur les matières grasses d'origine naturelle conduisent généralement à l'introduction de plusieurs fonctions chimiques différentes. Elles sont susceptibles de réagir avec le bitume mais surtout d'activer le processus de durcissement du fluxant au sein du bitume fluxé. Les matières grasses d'origine naturelle ainsi activées chimiquement polymérisent rapidement une fois mélangées avec le bitume.

La fonctionnalisation des matières grasses d'origine naturelle conduit à l'introduction d'atomes d'oxygène sur les molécules de fluxant, lesquels peuvent participer à la formation de ponts oxygène entre les molécules de fluxant et/ou entre les molécules de fluxant et d'autres composés du mélange comme le bitume. Dans le cas de fluxants non modifiés, ces ponts oxygène sont réalisés à partir de l'oxygène de l'air qui doit être greffé sur deux molécules, ce qui rend plus difficile la réalisation de tels ponts.

Les compositions de cires décrites ci-dessus, lorsqu'elles sont associées à un fluxant d'origine naturelle tel que défini précédemment, modifié chimiquement par oxydation ou non, confèrent au liant de l'invention de très bonnes performances d'usage.

Au moment de la mise en oeuvre du liant, il a été constaté qu'il était possible de réduire la proportion massique de fluxant dans le liant de 5 à 50 % par rapport à un fluxant d'origine fossile, tout en conservant une très bonne mouillabilité dans le cas d'un enduit superficiel, un très bon pouvoir d'enrobage et une très bonne maniabilité dans le cas d'enrobés au bitume fluxé ou à l'émulsion. De plus, grâce à cette association, les propriétés d'usage du liant sont obtenues au moins aussi rapidement, et généralement plus rapidement que lors de l'utilisation d'un liant bitumineux conventionnel contenant un fluxant d'origine fossile.

De préférence, le liant de l'invention ne comprend pas de catalyseur, en particulier pas de sels métalliques, ce qui est rendu possible par la performance de l'association entre la composition de cire et le fluxant naturel selon l'invention. Ceci représente une remarquable diminution d'impact sur l'environnement. Il est envisageable toutefois d'employer des catalyseurs organiques non nuisibles pour l'environnement.

Lors de la préparation du liant, la composition de cire peut être incorporée dans le liant, par exemple par mélange au bitume et au fluxant par dispersion ou dissolution, par toute méthode appropriée, par exemple sous forme liquide ou sous une forme divisée : granules, pastilles, paillettes, poudre, ou poudre micronisée, c'est-à-dire sous la forme d'une poudre très fine (de l'ordre du micron) qui est par conséquent plus dispersible.

La composition de cire peut notamment être incorporée dans le liant sous la forme d'une émulsion, par exemple une émulsion dans l'eau. Une telle émulsion peut comprendre un surfactant non ionique, anionique ou cationique.

Les procédés de préparation des émulsions de cire sont bien connus de l'homme du métier. En outre, une grande variété d'émulsions de cires est disponible dans le commerce.

Les liants selon l'invention peuvent être utilisés dans toutes les techniques routières, notamment les techniques d'enduits superficiels aux liants anhydres, dans les techniques d'enduits superficiels à l'émulsion, dans les techniques d'enrobage à froid à l'émulsion ou dans les techniques d'enrobage au liant anhydre fluxé.

Les liants de la présente invention comprennent généralement de 0,5 à 35 % de fluxant défini précédemment, préférentiellement de 0,5 à 10%, en masse par rapport à la masse totale de liant.

Lorsqu'ils sont utilisés dans les techniques d'enduits superficiels aux liants anhydres, ces fluxants représentent préférentiellement 2 à 15% en masse par rapport à la masse totale de liant.

Lorsqu'ils sont utilisés dans les techniques d'enduits superficiels à l'émulsion, ces fluxants représentent de préférence de 0,5 à 5% en masse par rapport à la masse totale de liant.

Lorsqu'ils sont utilisés dans les techniques d'enrobage à froid à l'émulsion, ces fluxants représentent de préférence de 0,5 à 35% en masse par rapport à la masse totale de liant.

Lorsqu'ils sont utilisés dans les techniques d'enrobage au liant anhydre fluxé, ces fluxants représentent de préférence de 0,5 à 15% en masse par rapport à la masse totale de liant.

La présente invention a enfin pour objet un matériau pour la réalisation de couches et/ou revêtements de construction routière et/ou de génie civil comprenant un liant hydrocarboné pour la réalisation de couches et/ou revêtements de construction routière et/ou de génie civil tel que défini précédemment.

Le matériau de l'invention peut comprendre en outre un granulat. Il peut être préparé, par exemple, en ajoutant la composition de cire au fluxant et au bitume en présence du mélange granulaire.

Lorsque le matériau de l'invention ne comprend pas de granulat, il peut être employé pour la réalisation de couches d'accrochage au bitume fluxé ou à l'émulsion.

Les exemples suivants, non limitatifs, illustrent la présente invention.

### Exemple 1 : Pourcentage de perte de masse de fluxant initial pour un enduit superficiel selon l'invention :

| | |
|---|---|
| Bitume 160/220 Shell CRR | 91,4% |
| Esters d'acide gras de colza oxydé | 7,6% |
| Cire de polyéthylène | 1% |
| Viscosité STV 4mm, 25°C | 170s |
| Perte de masse après 14 j à 50°C | 0,1% |
| TBA du liant résiduel après 24h à 40°C | 36°C |
| TBA du liant résiduel après 7j à 40°C | 41°C |

TBA = température de ramollissement bille-anneau, mesurée selon la norme européenne EN 1427 après 24 heures ou 7 jours. Ce paramètre permet d'évaluer la montée en cohésion, sa valeur étant d'autant plus élevée que la cohésion est avancée.

**Exemple comparatif 1** : Pourcentage de perte de masse de fluxant initial pour un enduit superficiel ne comprenant aucune cire :

| | |
|---|---|
| Bitume 160/220 Shell CRR | 92,3% |
| Esters d'acide gras de colza oxydé | 7,7% |
| Viscosité STV 4mm, 25°C | 170s |
| Perte de masse après 14 j à 50°C | 0,1% |
| TBA du liant résiduel après 24h à 40°C | 25°C |
| TBA du liant résiduel après 7j à 40°C | 31°C |

**Exemple comparatif 2** : Enduit superficiel comprenant un fluxant traditionnel (Gedeflux 200/300), composé d'un mélange d'hydrocarbures aromatiques vendu par la société VFT, et ne comprenant aucune cire :

| | |
|---|---|
| Bitume 160/220 Shell CRR | 91,9% |
| Gedeflux 200/300 | 8,1% |
| Viscosité STV 4mm, 25°C | 166 s |
| Perte de masse, en masse de fluxant initial, après 14 jours à 50°C | 83% |
| TBA du liant résiduel après 24h à 40 °C | 24°C |
| TBA du liant résiduel après 7 jours à 40 °C | 33,7°C |

Le bitume et le fluxant sont mélangés à 130 °C.

L'exemple comparatif 1, réalisé en utilisant le même enduit superficiel que celui de l'exemple 1 mais sans cire de polyéthylène, révèle l'influence de la cire sur les propriétés du liant. La présence de cet additif assure au liant de l'invention une montée en cohésion plus rapide que celle du même liant sans additif ou que celle d'un liant à base de fluxant fossile sans additif : le processus de durcissement du fluxant au sein du liant est accéléré.

Les résultats de l'exemple comparatif 2 montrent que le remplacement d'un fluxant d'origine fossile par un fluxant végétal permet de quasiment supprimer la perte de masse de liant en fluxant initial. Le fluxant de l'invention durcit dans le bitume une fois sa mission terminée, ce qui a pour effet de supprimer la quasi-totalité des émissions atmosphériques. Ceci représente un intérêt considérable en termes réglementaires de transport et d'étiquetage.

## Revendications

1. Liant hydrocarboné pour la réalisation de couches et/ou revêtements de construction routière et/ou de génie civil, comprenant au moins un bitume et au moins un fluxant à base de matières grasses d'origine naturelle, **caractérisé en ce qu'**il comprend en outre une composition de cire comprenant au moins une cire, et **en ce que** lesdites matières grasses d'origine naturelle ont subi une fonctionnalisation chimique par au moins une réaction d'oxydation ayant introduit dans ces matières grasses d'origine naturelle au moins un groupe fonctionnel choisi parmi les groupes acide carboxylique, diacide carboxylique, aldéhyde, peroxyde, éther, ester, alcool et cétone.

2. Liant selon la revendication 1, **caractérisé en ce que** les matières grasses d'origine naturelle sont choisies parmi les huiles obtenues dans la nature ou leurs dérivés, les graisses obtenues dans la nature ou leurs dérivés, les huiles végétales usagées provenant de l'industrie agroalimentaire et leurs mélanges.

3. Liant selon l'une quelconque des revendications précédentes, **caractérisé en ce que** les matières grasses d'origine naturelle sont choisies parmi les huiles et graisses animales et/ou végétales, de préférence les huiles végétales.

4. Liant selon la revendication 3, **caractérisé en ce que** les huiles végétales sont choisies parmi les huiles de tournesol, de colza, d'arachide, de coprah, de lin, de palme, de soja, d'olive, de ricin, de maïs, de courge, de pépins de raisin, de jojoba, de sésame, de noix, de noisette, de bois de chine, le tall oil, ainsi que leurs mélanges.

5. Liant selon l'une quelconque des revendications précédentes, **caractérisé en ce que** lesdites matières grasses d'origine naturelle sont des acides gras, des esters d'acides gras, préférentiellement des esters d'alkyle, des alcools gras, des esters d'alcools gras, des triglycérides, des esters de diacides gras, des esters d'acides résiniques, des acides résiniques, des dérivés de ces composés, et des mélanges de ces composés, d'origine animale ou végétale. ,

6. Liant selon l'une quelconque des revendications précédentes, **caractérisé en ce qu'**il est utilisé dans les techniques d'enduits superficiels aux liants anhydres, dans les techniques d'enduits superficiels à l'émulsion, dans les techniques d'enrobage à froid à l'émulsion ou dans les techniques d'enrobage au liant anhydre fluxé.

7. Liant selon l'une quelconque des revendications précédentes, **caractérisé en ce qu'**il comprend de 0,5 à 35 % de fluxant en masse par rapport à la masse totale de liant, préférentiellement de 0,5 à 10 % en masse par rapport à la masse totale de liant.

8. Liant selon l'une quelconque des revendications précédentes, **caractérisé en ce que** la composition de cire comprend une cire ou un mélange de cires dont le point de fusion appartient à la gamme 20-200 °C, de préférence 25-140 °C, mieux 35-120 °C.

9. Liant selon l'une quelconque des revendications précédentes, **caractérisé en ce qu'**il comprend au moins une cire choisie parmi les cires d'origine animale, les cires d'origine végétale, les cires minérales, les cires minérales provenant du pétrole, les cires synthétiques, et leurs mélanges.

10. Liant selon l'une quelconque des revendications précédentes, **caractérisé en ce qu'**il comprend au moins une cire partiellement ou totalement oxydée.

11. Liant selon l'une quelconque des revendications précédentes, **caractérisé en ce qu'**il comprend au moins une cire choisie parmi l'ozocérite, la cérésine, la cire de paraffine, la cire semicristalline, la cire microcristalline, la cire de paraffine écaille, les cires de polyoléfine, les cires de type éther de polyol ou ester de polyol, les cires obtenues par synthèse de Fischer-Tropsch, les cires de silicones, les cires hydrocarbonées halogénées, les cires fluorées, et leurs mélanges.

12. Liant selon l'une quelconque des revendications 1 à 10, **caractérisé en ce que** la composition de cire comprend au moins un ester d'acide gras.

13. Liant selon l'une quelconque des revendications 1 à 10, **caractérisé en ce que** la composition de cire comprend un ou plusieurs hydrocarbures aliphatiques.

14. Liant selon l'une quelconque des revendications précédentes, **caractérisé en ce que** la composition de cire représente 0,01 à 10 % de la masse totale du liant, de préférence 0,2 à 5 %, mieux 0,2 à 3 % de la masse totale du liant.

15. Liant selon l'une quelconque des revendications précédentes, **caractérisé en ce qu'**il ne comprend pas de catalyseur, de préférence pas de catalyseur de type sels métalliques.

16. Liant selon l'une quelconque des revendications précédentes, **caractérisé en ce que** la composition de cire est incorporée dans le liant sous forme liquide, sous une forme divisée telle qu'une poudre, une poudre micronisée, des granules, des pastilles ou des paillettes, ou sous forme d'une émulsion.

17. Matériau pour la réalisation de couches et/ou revêtements de construction routière et/ou de génie civil **caractérisé en ce qu'**il comprend un liant hydrocarboné pour la réalisation de couches et/ou revêtements de construction routière et/ou de génie civil selon l'une quelconque des revendications 1 à 16.

18. Matériau selon la revendication 17, **caractérisé en ce qu'**il comprend en outre un granulat.

## Patentansprüche

1. Bituminöses Bindemittel für die Herstellung von Schichten und/oder Verkleidungen im Straßenbau und/oder Tiefbau, umfassend mindestens ein Bitumen und mindestens ein Verdünnungsmittel auf Basis von Fettstoffen natürlichen Ursprungs, **dadurch gekennzeichnet, dass** es ferner eine Zusammensetzung von Wachs umfasst, die mindestens ein Wachs enthält, und dass die Fettstoffe natürlichen Ursprungs einer chemischen Funktionalisierung durch mindestens eine Oxydationsreaktion unterzogen wurden, bei der in diese Fettstoffe natürlichen Ursprungs mindestens eine funktionelle Gruppe eingeleitet wurde, die unter den Gruppen Carbonsäure, Dicarbonsäure, Aldehyd, Peroxid, Ether, Ester, Alkohol und Keton ausgewählt ist.

2. Bindemittel nach Anspruch 1, **dadurch gekennzeichnet, dass** die Fettstoffe natürlichen Ursprungs unter den Ölen, die in der Natur gewonnen werden, und ihren Derivaten, den Fetten, die in der Natur gewonnen werden, und ihren Derivaten, den gebrauchten pflanzlichen Ölen aus der Agrar- und Lebensmittelindustrie und ihren Gemischen ausgewählt werden.

3. Bindemittel nach einem der vorhergehenden Ansprüche, **dadurch gekennzeichnet, dass** die Fettstoffe natürlichen Ursprungs unter den tierischen und/oder pflanzlichen Ölen und Fetten, vorzugsweise den pflanzlichen Ölen, ausgewählt werden.

4. Bindemittel nach Anspruch 3, **dadurch gekennzeichnet, dass** die pflanzlichen Öle unter den Sonnenblumen-, Raps-, Erdnuss-, Kokos-, Lein-, Palm-, Soja-, Oliven-, Rizinus-, Mais-, Kürbis-, Weinbeerenkern-, Jojoba-, Sesam-, Walnuss-, Haselnuss-, Tungölen, Arganöl sowie ihren Gemischen ausgewählt werden.

5. Bindemittel nach einem der vorhergehenden Ansprüche, **dadurch gekennzeichnet, dass** die Fettstoffe natürlichen Ursprungs Fettsäuren, Fettsäureester, vorzugsweise Alkylester, Fettalkohole, Fettalkoholester, Triglyceride, Fettdiacidester, Harzsäureester, Harzsäuren, Derivate dieser Verbindungen und Gemische dieser Verbindungen tierischen oder pflanzlichen Ursprungs sind.

6. Bindemittel nach einem der vorhergehenden Ansprüche, **dadurch gekennzeichnet, dass** es bei den Techniken von Oberflächenbeschichtung mit wasserfreien Bindemitteln, bei den Techniken von Oberflächenbeschichtungen mit Emulsion, bei den Kaltummantelungstechniken mit Emulsion oder bei den Ummantelungstechniken mit einem verdünnten wasserfreien Bindemittel verwendet wird.

7. Bindemittel nach einem der vorhergehenden Ansprüche, **dadurch gekennzeichnet, dass** es 0,5 bis 35 % eines Verdünnungsmittels in Masse bezogen auf die Gesamtbindemittelmasse, vorzugsweise 0,5 bis 10 % in Masse bezogen auf die Gesamtbindemittelmasse, umfasst.

8. Bindemittel nach einem der vorhergehenden Ansprüche, **dadurch gekennzeichnet, dass** die Wachszusammensetzung ein Wachs oder ein Gemisch aus Wachsen umfasst, deren Schmelzpunkt dem Bereich 20-200 °C, vorzugsweise 25-140 °C, besser 35-120 °C, angehört.

9. Bindemittel nach einem der vorhergehenden Ansprüche, **dadurch gekennzeichnet, dass** es mindestens ein Wachs umfasst, das unter den Wachsen tierischen Ursprungs, den Wachsen pflanzlichen Ursprungs, den mineralischen Wachsen, den aus Petroleum stammenden mineralischen Wachsen, den synthetischen Wachsen und ihren Gemischen ausgewählt wird.

10. Bindemittel nach einem der vorhergehenden Ansprüche, **dadurch gekennzeichnet, dass** es mindestens ein teilweise oder vollständig oxydiertes Wachs umfasst.

11. Bindemittel nach einem der vorhergehenden Ansprüche, **dadurch gekennzeichnet, dass** es mindestens ein Wachs umfasst, das unter Ozokerit, Ceresin, Paraffinwachs, semikristallinem Wachs, mikrokristallinem Wachs, Wachs aus Paraffingatsch, den Polyolefinwachsen, den Wachsen des Typs Polyolether oder Polyolester, den Wachsen, die durch Fischer-Tropsch-Synthese gewonnen wurden, den Silikonwachsen, den halogenhaltigen bituminösen Wachsen, den fluorhaltigen Wachsen und ihren Gemischen ausgewählt wird.

12. Bindemittel nach einem der Ansprüche 1 bis 10, **dadurch gekennzeichnet, dass** die Wachszusammensetzung mindestens ein Fettsäureester umfasst.

13. Bindemittel nach einem der Ansprüche 1 bis 10, **dadurch gekennzeichnet, dass** die Wachszusammensetzung ein oder mehrere aliphatische Kohlenwasserstoffe umfasst.

14. Bindemittel nach einem der vorhergehenden Ansprüche, **dadurch gekennzeichnet, dass** die Wachszusammensetzung 0,01 bis 10 % der Gesamtmasse des Bindemittels, vorzugsweise 0,2 bis 5 %, besser 0,2 bis 3 % der Gesamtmasse des Bindemittels darstellt.

15. Bindemittel nach einem der vorhergehenden Ansprüche, **dadurch gekennzeichnet, dass** es keinen Katalysator, vorzugsweise keinen Katalysator des Typs Metallsalze, umfasst.

16. Bindemittel nach einem der vorhergehenden Ansprüche, **dadurch gekennzeichnet, dass** die Wachszusammensetzung in das Bindemittel in flüssiger Form, in geteilter Form, wie ein Pulver, ein mikronisiertes Pulver, Pastillen oder Pailletten, oder in Form einer Emulsion integriert ist.

17. Material für die Herstellung von Belägen und/oder Verkleidungen im Straßenbau und/oder Tiefbau, **dadurch gekennzeichnet, dass** es ein bituminöses Bindemittel für die Herstellung der Beläge und/oder Verkleidungen im Straßenbau und/oder Tiefbau nach einem der Ansprüche 1 bis 16 umfasst.

18. Material nach Anspruch 17, **dadurch gekennzeichnet, dass** es ferner ein Granulat umfasst.

## Claims

1. A hydrocarbon binder for making road construction and/or civil engineering layers and/or coatings, comprising at least one bitumen and at least one fluxing agent based on fatty matters of natural origin, **characterized in that** it further comprises a composition of wax comprising at least one wax, and **in that** said fatty matters of natural origin have undergone a chemical functionalization by at least one oxidation reaction having introduced in these fatty matters of natural origin at least one functional group chosen from the carboxylic acid, dicarboxylic acid, aldehyde, peroxide, ether, ester, alcohol and ketone groups.

2. The binder according to claim 1, **characterized in that** the fatty matters of natural origin are chosen from the oils obtained in the nature or derivatives thereof, the fats obtained in the nature or derivatives thereof, the used vegetable oils coming from the agri-food industry and mixtures thereof.

3. The binder according to any one of the preceding claims, **characterized in that** the fatty matters of natural origin are chosen from the animal and/or vegetable oils and fats, preferably the vegetable oils.

4. The binder according to claim 3, **characterized in that** the vegetable oils are chosen from the sunflower, colza, peanut, coconut, linseed, palm, soybean, olive, castor, corn, pumpkin, grape seed, jojoba, sesame, walnut, nut, China wood, tall oil, and mixtures thereof.

5. The binder according to any one of the preceding claims, **characterized in that** said fatty matters of natural origin are fatty acids, fatty acid esters, preferentially alkyl esters, fatty alcohols, fatty alcohol esters, triglycerides, fatty diacid esters, resin acid esters, resin acids, derivatives of these compounds, and mixtures of these compounds, of animal or vegetable origin.

6. The binder according to any one of the preceding claims, **characterized in that** it is used in the techniques of anhydrous-binder surface dressing, the techniques of emulsion surface dressing, the techniques of emulsion cold coating, or the techniques of fluxed anhydrous binder coating.

7. The binder according to any one of the preceding claims, **characterized in that** it comprises from 0.5 to 35 % by mass of fluxing agent with respect to the total mass of binder, preferentially from 0.5 to 10 % by mass with respect to the total mass of binder.

8. The binder according to any one of the preceding claims, **characterized in that** the wax composition comprises a wax or a mixture of waxes, the melting point of which is in the range 20-200°C, preferably 25-140°C, better 35-120°C.

9. The binder according to any one of the preceding claims, **characterized in that** it comprises at least one wax chosen from waxes of animal origin, waxes of vegetable origin, mineral waxes, mineral waxes derived from petroleum, synthetic waxes, and mixtures thereof.

10. The binder according to any one of the preceding claims, **characterized in that** it comprises at least one partially or totally oxidized wax.

11. The binder according to any one of the preceding claims, **characterized in that** it comprises at least one wax chosen from ozokerite, ceresin, paraffin wax, semi-crystalline wax, microcrystalline wax, paraffin scale wax, polyolefin waxes, polyol ether or polyol ester type waxes, waxes obtained by Fischer-Tropsch synthesis, silicone waxes, halogenated hydrocarbon waxes, fluorinated waxes, and mixtures thereof.

12. The binder according to any one of claims 1 to 10, **characterized in that** the wax composition comprises at least one fatty acid ester.

13. The binder according to any one of claims 1 to 10, **characterized in that** the wax composition comprises one or several aliphatic hydrocarbons.

14. The binder according to any one of the preceding claims, **characterized in that** the wax composition represents 0.01 to 10 % of the total mass of the binder, preferably 0.2 to 5 %, better 0.2 to 3 % of the total mass of the binder.

15. The binder according to any one of the preceding claims, **characterized in that** it comprises no catalyst, preferably no catalyst of the metal salt type.

16. The binder according to any one of the preceding claims, **characterized in that** the wax composition is incorporated into the binder in liquid form, in divided form such as a powder, a micronized powder, granulates, pellets or flakes, or in emulsion form.

17. A material for making road construction and/or civil engineering layers and/or coatings, **characterized in that** it comprises an hydrocarbon binder for making road construction and/or civil engineering layers and/or coatings according to any one of claims 1 to 16.

18. The material according to claim 17, **characterized in that** it further comprises an aggregate.
